# EUROPEAN PATENT APPLICATION

(11) **EP 2 911 386 A1**
(43) Date of publication of application: **26.08.2015**
(21) Application number: 13856524.7
(22) Date of filing: 25.10.2013
(51) Int. Cl.: H04N 7/15

(54) **A CONFERENCE TELEVISION TERMINAL, METHOD AND RELATED DEVICE FOR AUTOMATIC RESTORING SAME**

(30) Priority: 21.11.2012 CN 201210475175
(71) Applicant: ZTE Corporation, Shenzhen, Guangdong 518057 (CN)
(72) Inventor: ZHOU, Yunwu, Shenzhen, Guangdong 518057 (CN)
(74) Representative: Schröer, Gernot H.
(86) International application number: PCT/CN2013/085994
(87) International publication number: WO 2014/079301

(57) **Abstract**

A conference television terminal, method and related device for automatic control recovery thereof are disclosed. In the conference television terminal, a master device is configured to connect the conference television terminal to a conference; a main control device is configured to update configuration information synchronously with the master device when the conference television terminal is in a normal operation process, and to generate and transmit a control command when the master device fails; and a slave device is configured to receive the control command and connect the conference television terminal to the conference according to the control command. Embodiments of the present invention enable automatically recovering the conference in a case that the master device of the conference television terminal fails in the process that normal sessions of other terminals are not affected. The main control device controls the slave device to connect the terminal to the conference site, which avoids occurrence of interruption phenomenon in the conference and keeps the succession of the current conference.

## Description

### Technical Field

The present invention relates to the field of communication technologies, and in particular, to a conference television terminal and method and related device for automatic control recovery thereof.

### Background of the Related Art

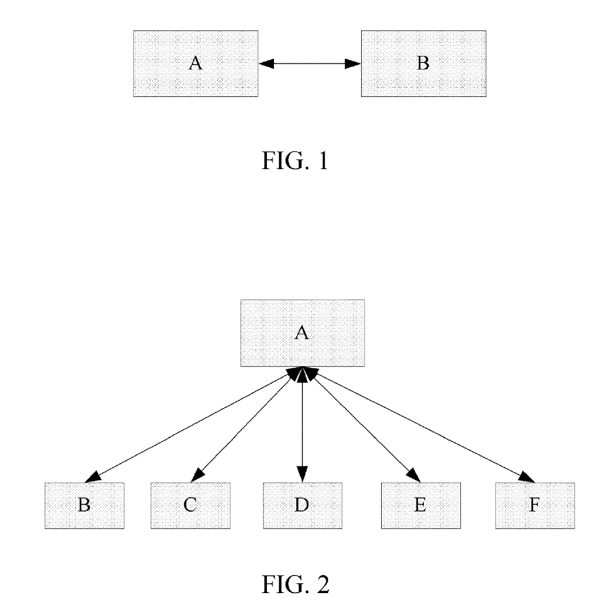

The conference television system is comprised of at least two conference television terminals, to implement audio and video calling between users through data transmission between the conference television terminals. There are two kinds of conference television terminals at present, one is a common terminal, and the other is a built-in Multipoint Control Unit (MCU) terminal. The common terminal supports a point-to-point conference, such as terminals A and B shown in Fig. 1. The built-in MCU terminal may support a multipoint conference, and an upper limit for calls is generally 5, such as terminal A shown in Fig. 2. In a case that the scale of the conference site is no more than 6, it is an economic selection manner of using the built-in MCU terminal for multipoint conference.

However, no matter whether the common terminal or the built-in MCU terminal, the current conference television terminal only has a master device. In the conference process, if there is fault in the hardware of the master device, the conference television will be interrupted and the master device have to be returned to the factory for maintenance or replacement with a new master device, which brings many inconveniences, especially in some important conference sites. If the interruption of the conference will bring big troubles to the user, it indirectly leads to a lot of losses.

### Summary of the Invention

In order to solve the problem in the prior art that the fault of the master device of the conference television terminal will results in interruption of the conference, the present invention provides a conference television terminal and method and related device for automatic control recovery thereof.

In one aspect, the present invention provides a conference television terminal, comprising: a master device, configured to connect the conference television terminal to a conference; a main control device, configured to update configuration information synchronously with the master device when the conference television terminal is in a normal operation process, and to generate and transmit a control command when the master device fails; and a slave device, configured to receive the control command and connect the conference television terminal to the conference according to the control command.

Preferably, the master device is configured to transmit fault information to the main control device when the master device fails; and the main control device is configured to generate the control command according to the fault information.

Preferably, the main control device is configured to periodically detect the master device, and when it is detected that the master device fails, generate the control command.

Preferably, the control command comprises call configuration information, and the slave device is configured to initiate a call according to the call configuration information, to connect the conference television terminal to the conference; wherein, the call configuration information corresponds to the configuration information when the master device fails.

Preferably, the conference television terminal further comprises a Multipoint Control Unit MCU, configured to control the master device or the slave device to connect the conference television terminal to the multi-terminal conference.

In another aspect, the present invention further provides a method for auto-matically control recovery of a conference television terminal, the conference television terminal comprising a master device, a main control device, and a slave device, the method comprising: the master device connecting the conference television terminal to a conference; the main control device of the conference television terminal updating configuration information synchronously with the master device when the conference television terminal is in a normal operation process, and generating and transmitting a control command to the slave device of the conference television terminal when the master device fails; and after receiving the control command, the slave device of the conference television terminal connecting the conference television terminal to the conference according to the control command.

At the same time, the present invention further provides a main control device, comprising: a configuration information update unit, configured to update configuration information synchronously with a master device of a conference television terminal when the conference television terminal is in a normal operation process; a detection processing unit, configured to generate a control command when the master device fails; and a transmission unit, configured to transmit the control command to a slave device of the conference television terminal.

Beneficial effects of the embodiments of the present invention are as follows:
In a point-to-point or multi-point conference, with the technical schemes according to the embodiments of the present invention, a control relationship between the main control device and the master and slave devices is set, which enables automatically recovering the conference in a case that the master device of the conference television terminal fails in the process that normal sessions of other terminals are not affected. The main control device controls the slave device to connect the terminal to the conference site, which avoids occurrence of interruption phenomenon in the conference and keeps the succession of the current conference.

### Brief Description of Drawings

- Fig. 1: is a conference television system comprised of common terminals in the related art;
- Fig. 2: is a conference television system comprised of built-in MCU terminals in the related art;
- Fig. 3: is a structural diagram of a conference television terminal according to an embodiment of the present invention;
- Fig. 4: is a diagram of constitution of a conference television terminal according to an embodiment of the present invention;
- Fig. 5: is a structural diagram of a conference television terminal according to another embodiment of the present invention;
- Fig. 6: is a structural diagram of a main control apparatus according to the present invention;
- Fig. 7: is a flowchart of a method for automatic control recovery of a conference television terminal according to the present invention;
- Fig. 8: is a flowchart of implementing automatic conference recovery by a conference television terminal according to an embodiment of the present invention.

### Preferred Embodiments of the Present Invention

The present invention will be further described in detail below in conjunction with accompanying drawings and embodiments. It should be understood that the specific embodiments described herein are merely used to explain the present invention without limiting the present invention.

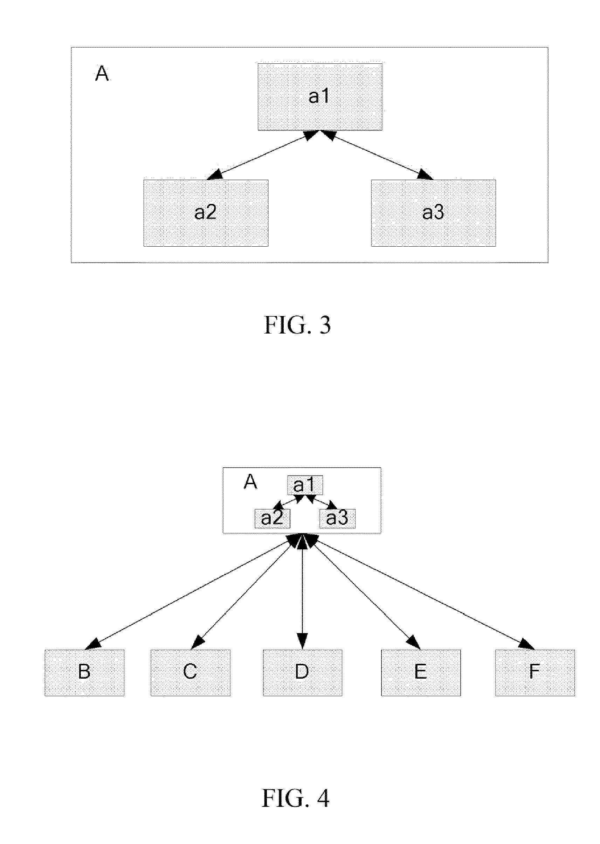

Fig. 3 is a structural diagram of a conference television terminal according to the present invention, comprising: a main control device a1, a master device a2, and a slave device a3, wherein, the master device a2 is configured to connect the conference television terminal to a conference; the main control device a1 is configured to update configuration information synchronously with the master device when the conference television terminal is in a normal operation process, and to generate and transmit a control command to the slave device a3 when the master device a2 fails; and the slave device a3 is configured to receive the control command transmitted by the main control device and connect the conference television terminal to the conference according to the control command.

The above conference television terminal according to the present invention is connected to the conference site through the master device a2 during a normal operation, uses the main control device a1 to control the master device a2 and the slave device a3, and when the master device a2 fails, immediately notifies the slave device a3 to connect the terminal to the conference site, thereby enabling the terminal to recover and avoiding the conference from halfway stopping due to the fault and hang of the master device a2.

In the embodiment of Fig. 3, in the phase of initializing the system, the main control device a1 issues initialization configuration information and related conference information to the master device a2 and the slave device a3, and the master device a2 connects the terminal to the conference site. In the normal operation process of the terminal, the main control device a1 and the master device a2 keep updating the configuration information synchronously, and when the master device a2 fails, it actively transmits fault information to the main control device a1, and after receiving the fault information, the main control device a1 generates a control command according to the fault information, and transmits the control command to the slave device a3, to notify the slave device a3 to connect the terminal to the conference site, so as to complete the automatic recovery of the terminal.

In another embodiment, in a normal operation process of the terminal, the main control device a1 periodically detects the master device a2, for example, checking for an operation state of the master device a2 through a periodic keep-alive process, and when it is detected that the master device a2 fails, the main control device a 1 immediately generates a control command, and transmits the control command to the slave device a3, to notify the slave device a3 to connect the terminal to the conference site, so as to complete the automatic recovery of the terminal.

The control command generated by the main control device a1 comprises related configuration information required when the slave device a3 connects the terminal. In a preferable embodiment of the present invention, the control command generated by the main control device a1 comprises call configuration information, which corresponds to the configuration information when the master device a2 fails, and therefore comprises the current configuration information of the conference during the fault. Then when the slave device a3 recovers the terminal, a call is initiated through the call configuration information, which may smoothly connect the terminal to the conference, without causing a pause phenomenon.

The conference television terminal in the above embodiments solves the case that the terminal is hung once the master device of the original conference television terminal fails, and can be widely applied in the common point-to-point terminal and the built-in MCU terminal. When it is applied in the built-in MCU terminal, for example, when the terminal A in Fig. 2 has the structure of the conference television terminal according to the present invention, with reference to Fig. 4, firstly, the terminal A has the built-in multipoint control unit MCU (not shown in Fig. 4), secondly, the terminal A further comprises the main control device, the master device, and the slave device described above in the present invention, and the MCU controls the master device to connect the terminal to the multipoint conference, to hold a multipoint conference with other five parallel conference sites. When the master device fails, the slave device connects the terminal to the conference, and the slave device enters an operation state, to ensure that the terminal A will not be disconnected, and the MCU controls the slave device to continue to implement the multipoint conference.

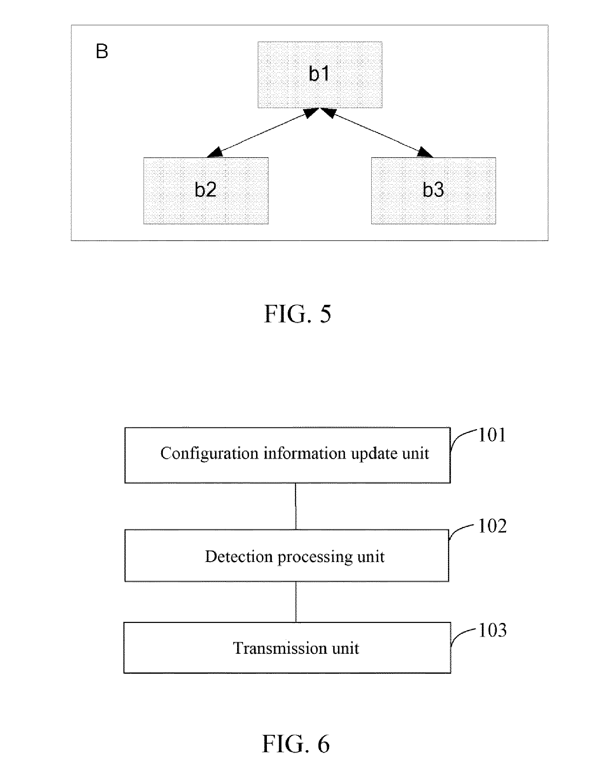

Further, in the embodiment of Fig. 4, all of other parallel conference sites in addition to the terminal A may use the conference television terminal according to the present invention (for example, terminal B illustrated in Fig. 5, which comprises a main control device b1, a master device b2, and a slave device b3), to ensure normal conference connection of the terminal. For the case that it is applied to a common terminal, the principle is the same, and will not be described in detail.

Specifically, Fig. 6 is a structural diagram of a main control device according to the present invention, comprising:
a configuration information update unit 101, configured to update configuration information synchronously with a master device of a conference television terminal when the conference television terminal is in a normal operation process;
a detection processing unit 102, configured to generate a control command when the master device fails; and
a transmission unit 103, configured to transmit the control command to a slave device of the conference television terminal.

Wherein, after receiving the fault information transmitted when the master device fails, the detection processing unit 102 may generate a corresponding control command according to the fault information, or may generate the control command by periodically detecting the master device to find the fault. The control command comprises configuration information which is required for the slave device to connect the terminal, which is for example the call configuration information corresponding to the configuration information when the main device fails. The slave device initiates a call according to the call configuration information, to connect the terminal to the conference site. Thus, with the main control apparatus, it can be ensured that the terminal is in a smooth and continuous connection state in the conference site.

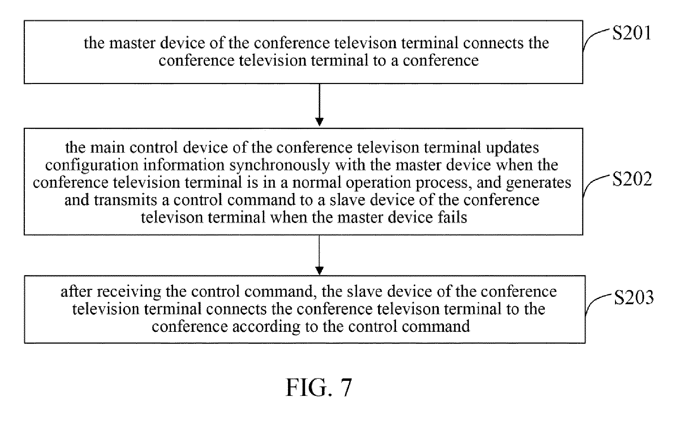

Correspondingly, a method for automatic control recovery of a conference television terminal according to the present invention, as shown in Fig. 7, comprises the following steps.

In step S201, the master device of the conference television terminal connects the conference television terminal to a conference;
in step S202, the main control device of the conference television terminal updates configuration information synchronously with the master device when the conference television terminal is in a normal operation process, and generates and transmits a control command to a slave device of the conference television terminal when the master device fails; and
in step S203, after receiving the control command, the slave device of the conference television terminal connects the conference television terminal to the conference according to the control command.

With the above method for automatic control recovery, when the conference television terminal is operated, the main control device, the master device, and the slave device of the terminal are controlled, and when the master device fails, the slave device implements connection, which ensures that the terminal will not be disconnected or interrupted due to the fault of the master device.

In the above embodiments, when the master device fails, the master device transmits fault information to the main control device, which generates the control command according to the fault information; or the main control device periodically detects the master device, and when it is detected that the master device fails, the main control device generates the control command. Wherein, the control command comprises call configuration information, which corresponds to the configuration information when the master device fails. The slave device initiates a call according to the call configuration information, to connect the terminal to the conference.

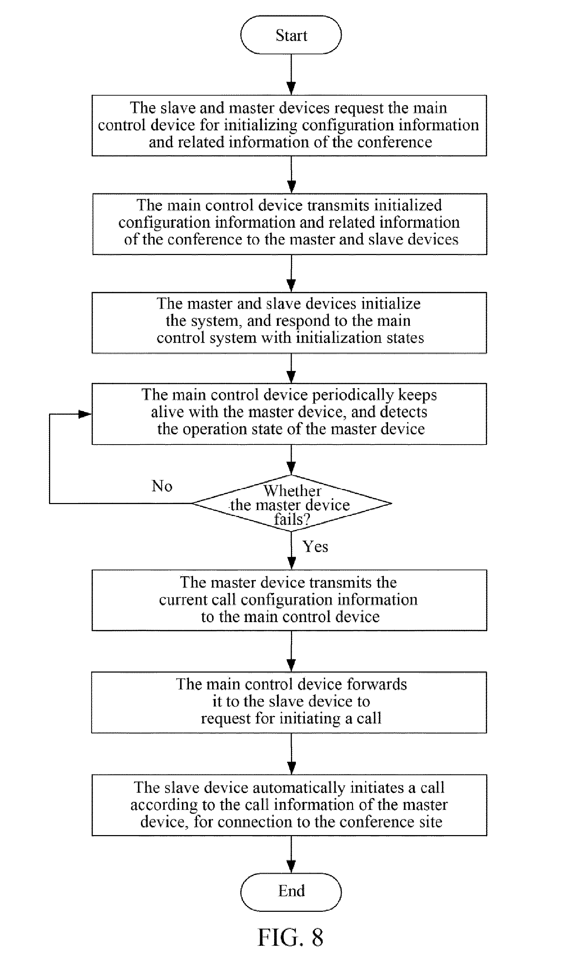

Fig. 8 illustrates a flowchart of implementing automatic conference recovery by a conference television terminal according to an embodiment of the present invention. After the conference television system is powered on, the master and slave devices of the terminal request the main control device for initializing the configuration information and the call information of the conference, and then the master and slave devices implement initialization respectively according to the initialized configuration information and call information of the conference issued by the main control device, and respond to the main control system with the initialization states thereof respectively. In the operation process, the operation states of the main control device and the master device are periodically kept alive, and when the main control device detects that the master device fails, the main control device issues the current call configuration information of the master device to the slave device, to control the slave device to implement automatic conference recovery. After receiving the call configuration information, the slave device initiates a call according to the call configuration information, and the terminal is connected to the conference site by the slave device, which will not influence normal conferences of other terminals.

Although preferable embodiments of the present invention have been disclosed for purpose of illustrations, those skilled in the art can understand that various improvements, add, and substitutions may also be possible. Therefore, the scope of the present invention should not be limited to the above embodiments.

### Industrial Applicability

In a point-to-point or multi-point conference, with the technical schemes according to the embodiments of the present invention, a control relationship between the main control device and the master and slave devices is set, which enables automatically recovering the conference in a case that the master device of the conference television terminal fails in the process that normal sessions of other terminals are not affected. The main control device controls the slave device to connect the terminal to the conference site, which avoids occurrence of interruption phenomenon in the conference and keeps the succession of the current conference.

## Claims

1. A conference television terminal, comprising:
a master device, configured to connect the conference television terminal to a conference;
a main control device, configured to update configuration information synchronously with the master device when the conference television terminal is in a normal operation process, and to generate and transmit a control command when the master device fails; and
a slave device, configured to receive the control command and connect the conference television terminal to the conference according to the control command.

2. The conference television terminal according to claim 1, wherein, the master device is configured to transmit fault information to the main control device when the master device fails; and the main control device is configured to generate the control command according to the fault information.

3. The conference television terminal according to claim 1, wherein, the main control device is configured to periodically detect the master device, and when it is detected that the master device fails, generate the control command.

4. The conference television terminal according to any one of claims 1-3, wherein, the control command comprises call configuration information, and the slave device is configured to initiate a call according to the call configuration information to connect the conference television terminal to the conference; wherein, the call configuration information corresponds to the configuration information when the master device fails.

5. The conference television terminal according to any one of claims 1-3, wherein, the conference television terminal further comprises a Multipoint Control Unit (MCU), configured to control the master device or the slave device to connect the conference television terminal to the multi-terminal conference.

6. A method for automatic control recovery of a conference television terminal,
the conference television terminal comprising a master device, a main control device, and a slave device,
the method comprising:
the master device connecting the conference television terminal to a conference;
the main control device of the conference television terminal updating configuration information synchronously with the master device when the conference television terminal is in a normal operation process, and
generating and transmitting a control command to the slave device of the conference television terminal when the master device fails; and
after receiving the control command, the slave device of the conference television terminal connecting the conference television terminal to the conference according to the control command.

7. The method for automatic control recovery of a conference television terminal according to claim 6, wherein, the master device transmits fault information to the main control device when the master device fails; and the main control device generates the control command according to the fault information; or the main control device periodically detects the master device, and when it is detected that the master device fails, the main control device generates the control command.

8. The method for automatic control recovery of a conference television terminal according to claim 6 or 7, wherein, the control command comprises call configuration information, and the slave device initiates a call according to the call configuration information to connect the conference television terminal to the conference; wherein, the call configuration information corresponds to the configuration information when the master device fails.

9. A main control device, comprising:
a configuration information update unit, configured to update configuration information synchronously with a master device of a conference television terminal when the conference television terminal is in a normal operation process;
a detection processing unit, configured to generate a control command when the master device fails; and
a transmission unit, configured to transmit the control command to a slave device of the conference television terminal.

10. The main control device according to claim 9, wherein, the detection processing unit is configured to: after receiving the fault information transmitted when the master device fails, generate the control command according to the fault information; or periodically detect the master device, and when it is detected that the master device fails, generate the control command.
